# EUROPEAN PATENT SPECIFICATION

(11) **EP 2 024 066 B1**
(45) Date of publication and mention of the grant of the patent: **26.06.2019**
(21) Application number: 07797874.0
(22) Date of filing: 30.05.2007
(51) Int. Cl.: B01D 61/14, C02F 1/44, B01D 61/02, B01D 61/58, C02F 1/56, C02F 103/06, B01D 61/16

(54) **METHOD OF IMPROVING PERFORMANCE OF ULTRAFILTRATION OR MICROFILTRATION MEMBRANE PROCESS IN LANDFILL LEACHATE TREATMENT**
VERFAHREN ZUR LEISTUNGSVERBESSERUNG VON ULTRAFITRATIONS- ODER MIKROFILTRATIONSMEMBRANVERFAHREN BEI DER BEHANDLUNG VON DEPONIESICKERWASSER
PROCÉDÉ D'AMÉLIORATION DU RENDEMENT DE L'ULTRAFILTRATION OU DE LA MICROFILTRATION PAR MEMBRANE DANS LE RETRAITEMENT DES LIXIVIATS DE MISE EN DÉCHARGE

(30) Priority: 31.05.2006 US 421187
(43) Date of publication of application: 18.02.2009
(73) Proprietor: Nalco Company, Naperville, IL 60563-1198 (US)
(72) Inventor: MUSALE, Deepak, A., Aurora, Illinois 60502 (US)
(74) Representative: Godemeyer Blum Lenze Patentanwälte Partnerschaft mbB - werkpatent
(86) International application number: PCT/US2007/069947
(87) International publication number: WO 2007/140393

(56) References cited:
- WO-A1-2005/070833
- CN-A- 1 736 904
- US-A- 5 182 023
- US-A- 5 766 478
- US-A1- 2004 168 980
- US-A1- 2007 003 370
- AMOKRANE A ET AL: "Landfill leachates pretreatment by coagulation-flocculation", WATER RESEARCH, ELSEVIER, AMSTERDAM, NL, vol. 31, no. 11, 1 November 1997 (1997-11-01), pages 2775-2782, XP004094222, ISSN: 0043-1354, DOI: 10.1016/S0043-1354(97)00147-4
- Marcel Mulder: "Basic Principles of membrane Technology", 1990, Kluwer Academic Publishers, Dordrecht page 209,

## Description

### FIELD OF THE INVENTION

This invention pertains to a method of processing landfill leachate via the use of a membrane system including a microfiltration membrane or an ultrafiltration membrane.

### BACKGROUND

Landfill leachate is a wastewater stream generated after rainwater percolates through the landfill of industrial or municipal solid waste. This stream contains high levels of contaminants such as suspended solids, colloidal material, bacteria, heavy metals and other soluble organics. Therefore, due to environmental concerns and regulations, the landfill leachate cannot be discharged in a river or other water bodies without treatment. Various membrane separation processes are utilized to combat this problem. Ultrafiltration (UF) and Microfiltration (MF), optionally followed by Nanofiltration (NF) or Reverse Osmosis (RO) membrane processes, are increasingly being used for removing the above-mentioned contaminants. The water treated by this method is very pure and can be discharged into bodies of water, or be reused, for example, as boiler feed water or for irrigation.

Although water quality obtained with these membrane processes is very high compared to the use of clarifiers or media filters, fouling of UF or MF membranes by landfill leachate contaminants results in reduced flux in membranes and an increase in frequency of membrane cleaning. As a result of the reduced flux rate, the number and / or size of UF/MF membranes needs to be increased, especially in the case where large amounts of wastewater are being processed. The requirement that membranes need to be larger and / or in greater number is problematic in that it increases capital costs. The requirement of frequent membrane cleaning is also problematic in that it increases operating cost. All of these problems make the process of using UF or MF membranes uneconomical to operate.

Therefore, it is of interest to minimize membrane fouling so that membranes: operate for a longer period between cleanings; operate at a rate of flux in accord with the chosen membrane; operate at higher than currently achievable fluxes; or a combination thereof. In addition, it of interest to lower the number and /or size of the membranes so that capital costs of new systems containing UF/MF membranes are lowered, especially when processing a large amount of wastewater.

WO 2005/070833 A1 discloses a method of treatment of ore leachate.

US 5 182 023 A discloses a method for treating raw water containing hardly decomposable substances such as dioxins and other endocrine-disrupting substances. US5182023 discloses a method of removal of arsenic from water, where the water results from leachates from abandoned mine tailings containing arsenates or fly ash leachate from plants burning arsenic contaminated coal.

US 2007/003370 A1 discloses a method of conditioning mixed liquor in a membrane biological reactor with the specific cationic copolymers.

CN 1 736 904 A discloses a method of treating landfill leachate with cationic polymers followed by filtration and RO.

AMOKRANE A ET AL: "Landfill leachates pretreatment by coagulation-flocculation", WATER RESEARCH, ELSEVIER, AMSTERDAM, NL, vol. 31, no. 11, 1 November 1997 (1997-11-01), pages 2775-2782 discloses a method of treating landfill leachate.

### SUMMARY OF THE INVENTION

The present invention provides a method of processing landfill leachate by use of one or more membrane separation processes according to claim 1.

Preferred embodiments are expressed in the dependent claims.

### BRIEF DESCRIPTION OF THE DRAWINGS

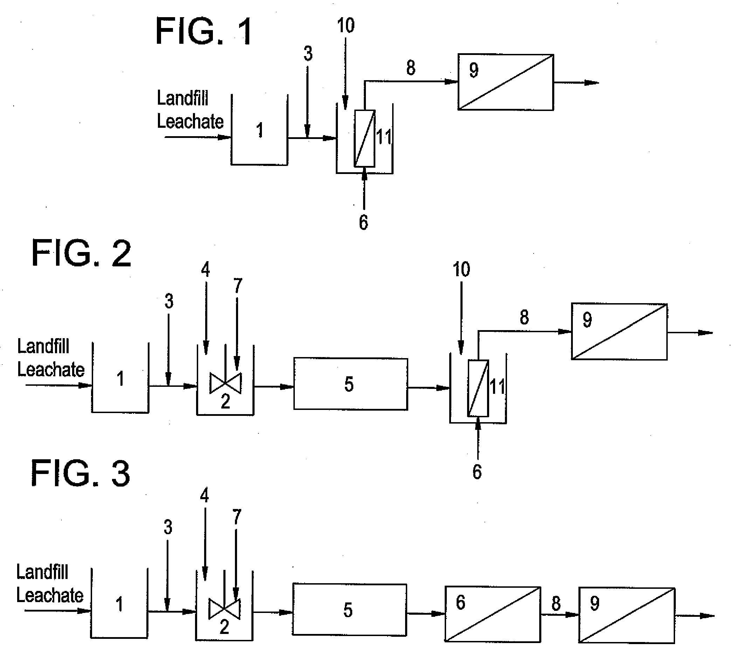

Figure 1 illustrates a general process scheme for processing landfill leachate, which includes a microfiltration membrane/ultrafiltration membrane, wherein the membrane is submerged in a tank, as well as an additional membrane for further processing of the permeate from said microfiltration membrane/ultrafiltration membrane.
Figure 2 illustrates a general process scheme for processing landfill leachate, which includes a mixing tank, clarifier/filter and a microfiltration membrane/ultrafiltration membrane, wherein the membrane is submerged in a tank, as well as an additional membrane for further processing of the permeate from said microfiltration membrane/ultrafiltration membrane.
Figure 3 illustrates a general process scheme for processing landfill leachate, which includes a mixing tank, clarifier/filter and a microfiltration membrane/ultrafiltration membrane, wherein the membrane is external to a feed tank that contains the landfill leachate, as well as an additional membrane for further processing of the permeate from said microfiltration membrane/ultrafiltration membrane.

### DETAILED DESCRIPTION OF THE INVENTION

### Definitions of Terms:

"UF" means ultrafiltration.

"MF" means microfiltration.

"Amphoteric polymer" means a polymer derived from both cationic monomers and anionic monomers, and, possibly, other non-ionic monomer(s). Amphoteric polymers can have a net positive or negative charge. The amphoteric polymer may also be derived from zwitterionic monomers and cationic or anionic monomers and possibly nonionic monomers. The amphoteric polymer is water soluble.

"Cationic polymer" means a polymer having an overall positive charge. The cationic polymers of this invention are prepared by polymerizing one or more cationic monomers, by copolymerizing one or more nonionic monomers and one or more cationic monomers, by condensing epichlorohydrin and a diamine or polyamine or condensing ethylenedichloride and ammonia or formaldehyde and an amine salt. The cationic polymer is water soluble.

"Zwitterionic polymer" means a polymer composed from zwitterionic monomers and, possibly, other non-ionic monomer(s). In zwitterionic polymers, all the polymer chains and segments within those chains are rigorously electrically neutral. Therefore, zwitterionic polymers represent a subset of amphoteric polymers, necessarily maintaining charge neutrality across all polymer chains and segments because both anionic charge and cationic charge are introduced within the same zwitterionic monomer. The zwitterionic polymer is water soluble.

### Preferred Embodiments:

As stated above, the invention provides for a method of processing landfill leachate by use of a microfiltration membrane or an ultrafiltration membrane.

After the landfill leachate is collected and treated with one or more water-soluble polymers, the landfill leachate is passed through a membrane. In one embodiment, the membrane may be submerged in a tank. In another embodiment, the membrane is external to a feed tank that contains said landfill leachate.

In another embodiment, the landfill leachate that passes through the microfiltration membrane or ultrafiltration membrane may be further processed through one or more membranes. In yet a further embodiment, the additional membrane is either a reverse osmosis membrane or a nanofiltration membrane.

Various landfill leachate processing schemes would be apparent to one of ordinary skill in the art. In one embodiment, the collected landfill leachate may be passed through one or more filters or clarifiers prior to its passage through an ultrafiltration membrane or a microfiltration membrane. In a further embodiment, the filter is selected from the group consisting of: a sand filter; a multimedia filter; a cloth filter; a cartridge filter; and a bag filter.

The membranes utilized to process landfill leachate may have various types of physical and chemical parameters.

With respect to physical parameters, in one embodiment, the ultrafiltration membrane has a pore size in the range of 0.003 to 0.1 µm. In another embodiment, the microfiltration membrane has a pore size in the range of 0.1 to 0.4 µm. In another embodiment, the membrane has a hollow fiber configuration with outside-in or inside-out filtration mode. In another embodiment, the membrane has a flat sheet configuration. In another embodiment, the membrane has a tubular configuration. In another embodiment, the membrane has a multi-bore structure.

With respect to chemical parameters, in one embodiment, the membrane is polymeric. In another embodiment, the membrane is inorganic. In yet another embodiment, the membrane is stainless steel.

There are other physical and chemical membrane parameters that may be implemented for the claimed invention.

Various types and amounts of chemistries maybe utilized to treat the landfill leachate. In one embodiment, the landfill leachate collected from a landfill site is treated with one or more water-soluble polymers. Optionally, mixing of the landfill leachate with the added polymer is assisted by a mixing apparatus. There are many different types of mixing apparatuses that are known to those of ordinary skill in the art.

In another embodiment, these water-soluble polymers typically have a molecular weight of about 2,000 to about 10,000,000 daltons.

Amphoteric polymers (not according to invention) are selected from the group consisting of: dimethylaminoethyl acrylate methyl chloride quaternary salt (DMAEA.MCQ) /acrylic acid copolymer, diallyldimethylammonium chloride/acrylic acid copolymer, dimethylaminoethyl acrylate methyl chloride salt/N,N-dimethyl-N-methacrylamidopropyl-N-(3-sulfopropyl)-ammonium betaine copolymer, acrylic acid/N,N-dimethyl-N-methacrylamidopropyl-N-(3-sulfopropyl)-ammonium betaine copolymer and DMAEA.MCQ/Acrylic acid/N,N-dimethyl-N-methacrylamidopropyl-N-(3-sulfopropyl)-ammonium betaine terpolymer.

In another embodiment the water soluble polymers have a molecular weight of about 2,000 to about 10,000,000 daltons. In yet a further embodiment, the water soluble polymers have a molecular weight from about 100,000 to about 2,000,000 daltons.

The dosage of the amphoteric polymers is from about 1ppm to about 500 ppm of active solids

The amphoteric polymers have a molecular weight of about 5,000 to about 2,000,000 daltons.

The amphoteric polymers have a cationic charge equivalent to anionic charge equivalent ratio of about 4.0:6.0 to about 9.8:0.2.

The cationic polymers (not according to the invention) are selected from the group consisting of: polydiallyldimethylammonium chloride ("poly DADMAC"); polyethyleneimine; polyepiamine; polyepiamine crosslinked with ammonia or ethylenediamine; condensation polymer of ethylenedichloride and ammonia; condensation polymer of triethanolamine and tall oil fatty acid; poly(dimethylaminoethylmethacrylate sulfuric acid salt); and poly(dimethylaminoethylacrylate methyl chloride quaternary salt).

According to the invention, the cationic polymers are copolymers of acrylamide ("AcAm") and one or more cationic monomers selected from the group consisting of: diallyldimethylammonium chloride; dimethylaminoethylacrylate methyl chloride quaternary salt; dimethylaminoethylmethacrylate methyl chloride quaternary salt; and dimethylaminoethylacrylate benzyl chloride ("DMAEA.BCQ") quaternary salt.

In another embodiment, the dosage of cationic polymers is from about 0.05 ppm to about 400 ppm active solids.

In another embodiment, the cationic polymers have a cationic charge of at least about 5 mole percent.

In another embodiment, the cationic polymers have a cationic charge of 100 mole percent.

In another embodiment, the cationic polymers have a molecular weight of about 100,000 to about 10,000,000 daltons.

The zwitterionic polymers (not according to the invention) are composed of about 1 to about 99 mole percent of N,N-dimethyl-N-methacrylamidopropyl-N-(3-sulfopropyl)-ammonium betaine and about 99 to about 1 mole percent of one or more nonionic monomers.

Three potential landfill leachate processing schemes are shown in Figure 1 through Figure 3.

Referring to Figure 1, landfill leachate is collected in a landfill leachate receptacle (1). The landfill leacheate then flows through a conduit, wherein said in-line addition (3) of one or more polymers occurs. The treated landfill leachate then flows into a membrane unit (6) that is submerged in a tank (11). Also, polymer (10) may be added to the tank (11) containing the submerged membrane. The submerged membrane may be an ultrafiltration membrane or a microfiltration membrane. Optionally, the subsequent permeate (8) then flows through an additional membrane (9) that may be either a reverse osmosis membrane or a nanofiltration membrane. Referring to Figure 2, landfill leachate is collected in a landfill leachate receptacle (1). The landfill leacheate then flows through a conduit, wherein said in-line addition (3) of one or more polymers occurs. The treated landfill leachate subsequently flows into a mixing tank (2), wherein it is mixed with a mixing apparatus (7), optionally additional polymer (4) is added to the mixing tank (2). The treated landfill leachate then travels through a pre-filter (5) or clarifier (5). The treated landfill leachate then flows through a conduit into a membrane unit (6) that is submerged in a tank (11). Optionally polymer (10) may be added to the tank (11) containing the submerged membrane. The submerged membrane may be an ultrafiltration membrane or a microfiltration membrane. Optionally, the subsequent permeate (8) then flows through an additional membrane (9) that maybe either a reverse osmosis membrane or a nanofiltration membrane.

Referring to Figure 3, landfill leachate is collected in a landfill leachate receptacle (1). The landfill leacheate then flows through a conduit, wherein said in-line addition (3) of one or more polymers occurs. The treated landfill leachate subsequently flows into a mixing tank (2), wherein it is mixed with a mixing apparatus (7), optionally additional polymer (4) is added to the mixing tank (2). The treated landfill leachate travels through a pre-filter (5) or clarifier (5). The treated landfill leachate then flows through a conduit into a membrane unit (6), either containing a microfiltration membrane or an ultrafiltration membrane. Optionally the subsequent permeate (8) then flows through an additional membrane (9) that may be either a reverse osmosis membrane or a nanofiltration membrane. The resulting permeate is collected for various purposes known to those of ordinary skill in the art.

In another embodiment, the membrane separation process is selected from the group consisting of: a cross-flow membrane separation process; a semi-dead-end flow membrane separation process; and a dead-end flow membrane separation process.

The following examples are not intended to limit the scope of the claimed invention.

### EXAMPLES

Membrane flux was studied by performing water turbidity studies. Based on the well-established literature on water treatment using membranes, the significant decrease in water turbidity is expected to minimize the membrane fouling and allow the UF/MF operation at the same flux but for much longer run times between cleanings or even at higher flux. Turbidity was measured by a Hach Turbidimeter (Hach, Ames, IA), that is sensitive to 0.06 NTU (Nephelometric Turbidimetric Unit).

### Example 1

Landfill leachate obtained from the eastern United States and contained in a 500 ml jar was treated by mixing with various dosages of Product A (Core shell copolymer of DMAEA.MCQ, and AcAm, cationic with 50% mole charge) and Product B (Copolymer of DMAEA.MCQ and AcAm, cationic with 50% mole charge), for about 2 minutes. The treated leachate was then settled for 10 minutes, and the turbidity of supernatant was measured. The colloidal material, which is the main cause of higher turbidity in leachate, was coagulated and flocculated by this method.

**Table 1: Turbidity (NTU) of treated and settled landfill leachate from eastern US**

| Polymer Dosage (ppm) based upon actives | Product A | Product B |
|---|---|---|
| 0 (Untreated) | 359 | |
| 50 | 256 | 390 |
| 100 | 176 | 296 |
| 150 | 99 | 207 |
| 200 | 68 | 159 |
| 250 | 61 | 118 |
| 500 | | 26.4 |

As shown in Table 1, there is over 83% and 90% reduction in turbidity after treatment with 250 ppm Product A and 500 ppm Product B, respectively. Therefore, if leachate is treated by, e.g. 200 ppm Product-B (concentration lower than that required for maximum turbidity removal, so that free polymer does not exist to come in contact with membrane surface), a dramatic improvement in membrane performance is expected.

### Example 2

A leachate sample obtained from south-eastern US was studied in the same manner as in Example 1. The leachate sample was treated with Polymer A (same as in Example 1), Polymer C (Copolymer of DMAEA.MCQ, DMAEA.BCQ and AcAm, cationic with 35% mole charge), and Polymer D (Polydiallyldimethylammoniumchloride, cationic with 100% mole charge). Turbidity removal results are shown in Table 2.

**Table 2: Turbidity (NTU) of treated and settled landfill leachate from south-eastern US**

| Polymer Dosage (ppm) | Product-A | Product-C | Product-D |
|---|---|---|---|
| 0 (Untreated) | 21 | | |
| 10 | 2.58 | | |
| 20 | | 3.5 | |
| 100 | | | 3.3 |

As shown in Table 2, over 83% of turbidity was removed by treatment with Product A, C or D, although at different dosages.

## Claims

1. A method of processing landfill leachate by use of a membrane separation process comprising the following steps:
a. collecting landfill leachate in a receptacle suitable to hold said landfill leachate;
b. treating said landfill leachate with one or more water soluble polymers, wherein said water soluble polymers are cationic polymers;
c. optionally mixing said water soluble polymers with said landfill leachate;
d. passing said treated landfill leachate through a membrane, wherein said membrane is an ultrafiltration membrane or a microfiltration membrane; and
e. optionally back-flushing said membrane to remove solids from the membrane surface,
wherein the cationic polymers are copolymers of acrylamide and one or more cationic monomers selected from the group consisting of:
diallyldimethylammonium chloride, dimethylaminoethylacrylate methyl chloride quaternary salt, dimethylaminoethylmethacrylate methyl chloride quaternary salt and dimethylaminoethylacrylate benzyl chloride quaternary salt.

2. The method of claim 1, wherein a driving force for passage of said landfill leachate through said membrane is positive or negative pressure,

3. The method of claim 1, wherein said ultrafiltration membrane has a pore size in the range of 0.003 to 01 µm.

4. The method of claim 1, wherein said microfiltration membrane has a pore size in the range of 0.1 to 0.4 µm.

5. The method of claim 1, wherein said membrane is submerged in a tank.

6. The method of claim 1, wherein said membrane is external to a feed tank that contains said landfill leachate.

7. The method of claim 1, wherein the water soluble polymers have a molecular weight of about 2,000 to about 10,000,000 daltons.

8. The method of claim 1, wherein the dosage of cationic polymers are from about 0.05 ppm to about 400 ppm active solids.

9. The method of claim 1, wherein the cationic polymers have a cationic charge of at least about 5 mole percent.

10. The method of claim 1, wherein the cationic polymers have a cationic charge of 100 mole percent.

11. The method of claim 1, wherein the cationic polymers have a molecular weight of about 500,000 to about 10,000,000 daltons.

12. The method of claim 1 further comprising passing said landfill leachate through a filter or a clarifier prior to said landfill leachate's passage through said membrane.

13. The method of claim 1 further comprising: passing a filtrate from said membrane through an additional membrane.

## Patentansprüche

1. Verfahren zur Verarbeitung von Deponiesickerwasser durch Verwendung eines Membrantrennverfahrens, das die folgenden Schritte umfasst:
a. Sammeln von Deponiesickerwasser in einem Behälter, der geeignet ist, das Deponiesickerwasser zu aufzunehmen;
b. Behandeln des Deponiesickerwassers mit einem oder mehreren wasserlöslichen Polymeren, wobei die wasserlöslichen Polymere kationische Polymere sind;
c. optional Mischen der wasserlöslichen Polymere mit dem Deponiesickerwasser;
d. Leiten des behandelten Deponiesickerwasser durch eine Membran, wobei die Membran eine Ultrafiltrationsmembran oder eine Mikrofiltrationsmembran ist; und
e. optional Rückspülen der Membran, um Feststoffe von der Membranoberfläche zu entfernen,
wobei die kationischen Polymere Copolymere von Acrylamid und einem oder mehreren kationischen Monomeren sind, die aus der Gruppe ausgewählt sind, die besteht aus:
Diallyldimethylammoniumchlorid, quartäres Dimethylaminoethylacrylatmethylchloridsalz, quaternäres Dimethylaminoethylmethacrylatmethylchloridsalz und quaternäres Dimethylaminoethylacrylatbenzylchloridsalz.

2. Verfahren nach Anspruch 1, wobei eine Antriebskraft für den Durchtritt des Deponiesickerwassers durch die Membran Überdruck oder Unterdruck ist.

3. Verfahren nach Anspruch 1, wobei die Ultrafiltrationsmembran eine Porengröße im Bereich von 0,003 bis 0,1 um aufweist.

4. Verfahren nach Anspruch 1, wobei die Mikrofiltrationsmembran eine Porengröße im Bereich von 0,1 bis 0,4 um aufweist.

5. Verfahren nach Anspruch 1, wobei die Membran in einen Tank getaucht ist.

6. Verfahren nach Anspruch 1, wobei sich die Membran außerhalb eines Zufuhrtanks befindet, der das Deponiesickerwasser enthält.

7. Verfahren nach Anspruch 1, wobei die wasserlöslichen Polymere ein Molekulargewicht von etwa 2.000 bis etwa 10.000.000 Dalton aufweisen.

8. Verfahren nach Anspruch 1, wobei die Dosierung von kationischen Polymeren von etwa 0,05 ppm bis etwa 400 ppm aktive Feststoffe beträgt.

9. Verfahren nach Anspruch 1, wobei die kationischen Polymere eine kationische Ladung von mindestens etwa 5 Molprozent aufweisen.

10. Verfahren nach Anspruch 1, wobei die kationischen Polymere eine kationische Ladung von 100 Molprozent aufweisen.

11. Verfahren nach Anspruch 1, wobei die kationischen Polymere ein Molekulargewicht von etwa 500.000 bis etwa 10.000.000 Dalton aufweisen.

12. Verfahren nach Anspruch 1, das ferner das Leiten des Deponiesickerwassers durch einen Filter oder ein Klärbecken umfasst, bevor das Deponiesickerwasser durch die Membran hindurchtritt.

13. Verfahren nach Anspruch 1, ferner umfassend:
Leiten eines Filtrats von der Membran durch eine zusätzliche Membran.

## Revendications

1. Procédé de traitement de lixiviat de décharge grâce à un procédé de séparation par membrane comprenant les étapes suivantes :
a. recueillir le lixiviat de décharge dans un réceptacle approprié pour contenir ledit lixiviat de décharge ;
b. traiter ledit lixiviat de décharge par un ou plusieurs polymères solubles dans l'eau, dans lequel lesdits polymères solubles dans l'eau sont des polymères cationiques ;
c. mélanger éventuellement lesdits polymères solubles dans l'eau audit lixiviat de décharge ;
d. faire passer ledit lixiviat de décharge traité à travers une membrane, dans lequel ladite membrane est une membrane d'ultrafiltration ou une membrane de microfiltration ; et
e. éventuellement, décolmater ladite membrane afin d'éliminer les solides de la surface de la membrane,
dans lequel les polymères cationiques sont des copolymères d'acrylamide et d'un ou de plusieurs monomères cationiques choisis dans le groupe comprenant :
du chlorure de diallyldiméthylammonium, du sel quaternaire de chlorure de méthyle de diméthylaminoéthylacrylate, du sel quaternaire de chlorure de méthyle de diméthylaminoéthylméthacrylate et du sel quaternaire de chlorure de benzyle de diméthylaminoéthylacrylate.

2. Procédé selon la revendication 1, dans lequel une force motrice permettant le passage dudit lixiviat de décharge à travers ladite membrane est une pression positive ou négative.

3. Procédé selon la revendication 1, dans lequel ladite membrane d'ultrafiltration présente une taille de pores dans la plage de 0,003 à 0,1 µm.

4. Procédé selon la revendication 1, dans lequel ladite membrane de microfiltration présente une taille de pores dans la plage de 0,1 à 0,4 µm.

5. Procédé selon la revendication 1, dans lequel ladite membrane est immergée dans un réservoir.

6. Procédé selon la revendication 1, dans lequel ladite membrane est externe à un réservoir d'alimentation qui contient ledit lixiviat de décharge.

7. Procédé selon la revendication 1, dans lequel les polymères solubles dans l'eau présentent une masse moléculaire d'environ 2 000 à environ 10 000 000 daltons.

8. Procédé selon la revendication 1, dans lequel le dosage de polymères cationiques est d'environ 0,05 ppm à environ 400 ppm de solides actifs.

9. Procédé selon la revendication 1, dans lequel les polymères cationiques présentent une charge cationique d'au moins environ 5 moles pour cent.

10. Procédé selon la revendication 1, dans lequel les polymères cationiques présentent une charge cationique de 100 moles pour cent.

11. Procédé selon la revendication 1, dans lequel les polymères cationiques présentent une masse moléculaire d'environ 500 000 à environ 10 000 000 daltons.

12. Procédé selon la revendication 1, consistant en outre à faire passer ledit lixiviat de décharge à travers un filtre ou un clarificateur avant le passage dudit lixiviat de décharge à travers ladite membrane.

13. Procédé selon la revendication 1, consistant en outre à :
faire passer un filtrat de ladite membrane à travers une membrane supplémentaire.
